# EUROPÄISCHE PATENTSCHRIFT

(11) **EP 3 325 197 B1**
(45) Veröffentlichungstag und Bekanntmachung des Hinweises auf die Patenterteilung: **28.10.2020**
(21) Anmeldenummer: 16751191.4
(22) Anmeldetag: 20.07.2016
(51) Int. Cl.: B23B 29/20

(54) **BASISELEMENT FÜR EINE WERKZEUGAUFNAHME**
BASE ELEMENT FOR A TOOL HOLDER
ÉLÉMENT DE BASE POUR LOGEMENT D'OUTIL

(30) Priorität: 20.07.2015 DE 102015111735
(43) Veröffentlichungstag der Anmeldung: 30.05.2018
(73) Patentinhaber: Stahl, Stefan, 35708 Haiger-Sechshelden (DE)
(72) Erfinder: Stahl, Stefan, 35708 Haiger-Sechshelden (DE)
(74) Vertreter: Epping - Hermann - Fischer
(86) Internationale Anmeldenummer: PCT/EP2016/067261
(87) Internationale Veröffentlichungsnummer: WO 2017/013157

(56) Entgegenhaltungen:
- EP-A2- 0 371 351
- EP-A2- 0 962 280
- DE-A1- 4 227 268
- US-A- 2 436 952
- US-A- 2 708 583
- US-A1- 2014 196 583

## Beschreibung

Die vorliegende Erfindung betrifft ein Basiselement für eine Werkzeugaufnahme.

Bei einer Werkzeugaufnahme handelt es sich um ein Bauteil, das dazu ausgelegt ist, ein Werkzeug aufzunehmen und zu halten. Eine Werkzeugaufnahme kann beispielsweise unterschiedliche Werkzeuge wie Bohrer, Fräser, Gewindebohrer und ähnlichen Zerspanungswerkzeugen aufnehmen und festspannen. US 2 708 583 A, EP 0 371 351 A2, DE 42 27 268 A1, US 2014/196583 A1 und US 2 436 952 A zeigen jeweils einen Mechanismus, der es ermöglicht, eine Werkzeugaufnahme linear zu bewegen. EP 0 962 280 A2 zeigt ein Mechanismus, der es ermöglicht, eine Werkzeugaufnahme zu drehen.

Mit einem Werkzeug kann ein Werkstück bearbeitet werden. Das Werkzeug wirkt dabei unmittelbar auf das Werkstück ein.

Als Basiselement wird wiederum ein Bauteil bezeichnet, an dem die Werkzeugaufnahme befestigbar ist und das die Werkzeugaufnahme auf diese Weise mit einer weiteren Maschine, die beispielsweise das Werkzeug antreibt, verbindet.

Um ein Werkzeug in optimaler Weise einsetzen zu können, ist es oft erforderlich das Werkzeug hinsichtlich eines zu behandelnden Werkstücks auszurichten. Die der vorliegenden Erfindung zugrundeliegende Aufgabe ist es, ein Basiselement bereitzustellen, das dazu ausgelegt ist, diese Ausrichtung zu vereinfachen. Insbesondere kann es das Basiselement ermöglichen, eine solche Ausrichtung vorzunehmen, ohne eine Befestigung des Werkzeugs in der Werkzeugaufnahme lösen zu müssen.

Die Aufgabe wird durch ein Basiselement gemäß Anspruch 1 gelöst.

Es wird ein Basiselement vorgeschlagen, an dem eine Werkzeugaufnahme befestigbar ist, wobei das Basiselement einen Höhenverstellmechanismus aufweist, der es ermöglicht, eine Werkzeugaufnahme in verschiedenen Relativpositionen relativ zu dem Basiselement an diesem zu befestigen, so dass die Relativposition der Werkzeugaufnahme zu dem Basiselement in einer ersten Raumrichtung veränderbar ist, wobei die Werkzeugaufnahme als Ganzes relativ zu dem Basiselement in der ersten Raumrichtung bewegbar ist. Das Basiselement (1) weist einen Lageeinstellmechanismus (22) auf, dazu ausgestaltet ist, die Orientierung einer an dem Basiselement befestigte Werkzeugaufnahme relativ zu dem Basiselement dadurch zu ändern, dass die Werkzeugaufnahme relativ zu dem Basiselement gedreht wird.

Sowohl der Höhenverstellmechanismus als auch der Lageeinstellmechanismus ermöglichen es auf diese Weise, ein an der Werkzeugaufnahme befestigtes Werkzeug relativ zu einem Werkstück auszurichten, indem die Position und Orientierung der Werkzeugaufnahme relativ zu dem Basiselement angepasst wird. Dadurch kann eine solche Ausrichtung vorgenommen werden, ohne die Befestigung des Werkzeugs an der Werkzeugaufnahme ändern zu müssen.

Die vorliegende Erfindung schlägt somit vor, den Höhenverstellmechanismus in dem Basiselement vorzusehen. Der Höhenverstellmechanismus erlaubt es insbesondere, die Relativposition von Werkzeugaufnahme und Basiselement zueinander in einer Koordinate, nämlich der Höhe, zu verändern. Auf diese Weise kann auch die absolute Position im Raum einer an dem Basiselement befestigten Werkzeugaufnahme verändert werden. Damit ändert sich auch die absolute Position eines an der Werkzeugaufnahme befestigten Werkzeugs. Da diese Änderung durch die Änderung der Relativposition von Basiselement und Werkzeugaufnahme zueinander erfolgt, kann somit die absolute Position des Werkzeugs im Raum verändert werden, ohne dass das Werkzeug aus einer Befestigung in der Werkzeugaufnahme gelöst werden müsste.

Die Relativpositionen, an denen die Werkzeugaufnahme an dem Basiselement befestigt werden kann, können kontinuierlich entlang der ersten Raumachse liegen. Die Werkzeugaufnahme kann beispielsweise um eine festgelegte Strecke entlang der ersten Raumachse verschoben werden und an jeder Position, die sie dabei relativ zu dem Basiselement einnimmt, befestigbar sein.

Die Relativposition der Werkzeugaufnahme relativ zu dem Basiselement kann dabei stets anhand eines relativen Koordinatensystems bestimmt werden, das fest an das Basiselement gekoppelt ist. Wird das Basiselement beispielsweise gedreht, so kann sich das relative Koordinatensystem mitdrehen.

Die erste Raumrichtung kann dabei eine Höhe angeben. Die erste Raumrichtung kann senkrecht zu einer dritten Raumrichtung sein, welche parallel zu einer Grundaufnahme des Basiselements verläuft.

Der Höhenverstellmechanismus ist dazu ausgestaltet, die Werkzeugaufnahme als Ganzes relativ zu dem Basiselement in die erste Raumrichtung zu bewegen. Dabei werden vorzugsweise keine Elemente der Werkzeugaufnahme relativ zueinander bewegt. Vielmehr kann die Werkzeugaufnahme als Ganzes, d.h. die gesamte Werkzeugaufnahme als eine Einheit, bewegt werden. Der Höhenverstellmechanismus kann derart ausgestaltet sein, dass die Relativposition der Werkzeugaufnahme zu dem Basiselement verändert werden kann, ohne die Relativposition eines an der Werkzeugaufnahme befestigten Werkzeugs zu der Werkzeugaufnahme zu verändern. Der Höhenverstellmechanismus kann es ermöglichen die Höhe der Position, an der ein an der Werkzeugaufnahme befestigtes Werkzeug an ein Werkstück angreift, zu verändern.

Der Lageeinstellmechanismus ermöglicht es, Winkelkorrekturen in der Ausrichtung eines Werkzeugs, das an der Werkzeugaufnahme befestigt ist, die wiederum an dem Basiselement befestigt ist, vorzunehmen. Dabei kann die Orientierung des Werkzeugs relativ zu dem Basiselement geändert werden, indem die Werkzeugaufnahme relativ zu dem Basiselement gedreht wird. Der Lageeinstellmechanismus ist derart ausgestaltet, dass bei einer Drehung einer an dem Basiselement befestigte Werkzeugaufnahme relativ zu dem Basiselement weder eine Position noch eine Orientierung eines an der Werkzeugaufnahme befestigten Werkzeugs relativ zu der Werkzeugaufnahme verändert wird. Auf diese Weise kann eine Ausrichtung des Werkzeugs vorgenommen werden, ohne die Verbindung des Werkzeugs zu der Werkzeugaufnahme lösen zu müssen.

Der Lageeinstellmechanismus kann dazu ausgestaltet sein, die Werkzeugaufnahme als Ganzes relativ zu dem Basiselement zu drehen. Dabei kann die gesamte Werkzeugaufnahme als Einheit relativ zu dem Basiselement gedreht werden.

Der Höhenverstellmechanismus kann derart ausgestaltet sein, dass bei einer Änderung der Relativposition der Werkzeugaufnahme zu dem Basiselement die Relativposition der Werkzeugaufnahme in zwei zu der ersten Raumrichtung senkrechten Raumrichtungen unverändert bleibt. Der Höhenverstellmechanismus kann dementsprechend so ausgelegt sein, dass die Relativposition der Werkzeugaufnahme zu dem Basiselement nur in der ersten Raumrichtung veränderbar ist.

Da die Relativposition in der zweiten und der dritten Raumrichtung nicht veränderbar sein kann, kann vermieden werden, dass die Werkzeugaufnahme versehentlich, in diesen Raumrichtungen verstellt wird. Durch die Beschränkung des Höhenverstellmechanismus auf eine Raumrichtung, in die die Werkzeugaufnahme bewegbar ist, kann die Positionierung der Werkzeugaufnahme in dieser Raumrichtung besonders präzise vorgenommen werden.

Das Basiselement kann zumindest ein erstes Führungselement aufweisen, das dazu ausgestaltet sein kann, eine Bewegung einer an dem Basiselement zu befestigenden Werkzeugaufnahme in die erste Raumrichtung relativ zu dem Basiselement zu ermöglichen und eine Bewegung der Werkzeugaufnahme in zu der ersten Raumrichtung senkrechten Raumrichtungen zu verhindern.

Für dieses Führungselement sind verschiedene Ausgestaltungen denkbar. Beispielsweise kann es sich bei dem Führungselement um ein Langloch oder eine Schiene handeln, in denen ein entsprechendes Befestigungselement der Werkzeugaufnahme geführt werden kann.

Der Höhenverstellmechanismus kann zumindest ein erstes Führungselement mit einer Öffnung, die dazu ausgestaltet ist, ein Element einer an dem Basiselement befestigten Werkzeugaufnahme aufzunehmen, und ein bewegliches Element, das relativ zu dem ersten Führungselement bewegt werden kann und das einen Teil der Öffnung verdeckt, aufweist. Dabei kann es sich um das im vorherigen Abschnitt genannte erste Führungselement handeln.

Durch eine Bewegung des beweglichen Elements kann dabei eine Größe des von dem beweglichen Element verdeckten Teils der Öffnung verändert werden. Das bewegliche Element kann vorzugsweise manuell bewegt werden, beispielsweise durch das Drehen einer Stellschraube.

Der Höhenverstellmechanismus kann derart ausgestaltet sein, dass eine an dem Basiselement zu befestigende Werkzeugaufnahme relativ zu dem Basiselement in die erste Raumrichtung bewegt wird, wenn das bewegliche Element relativ zu dem Führungselement bewegt wird. Dementsprechend kann eine Bewegung des beweglichen Elements in eine Bewegung der Werkzeugaufnahme umgewandelt werden. Es ist somit nicht erforderlich, dass ein Nutzer des Basiselementes unmittelbar mit der Werkzeugaufnahme interagiert. Somit kann verhindert werden, dass versehentlich ein in der Werkzeugaufnahme verspanntes Werkzeug verstellt oder beschädigt wird. Dadurch das die Werkzeugaufnahme sich über eine Bewegung des beweglichen Elements relativ zu dem Basiselement bewegen lassen kann, kann die Relativposition der Werkzeugaufnahme zu dem Basiselement in kontrollierter Weise eingestellt werden.

Bei der Bewegung des beweglichen Elements, die in eine Bewegung der Werkzeugaufnahme in die erste Raumrichtung umgewandelt werden kann, kann es sich insbesondere um eine Bewegung in die zweite Raumrichtung handeln, welche senkrecht zur ersten Raumrichtung ist.

Das Basiselement kann ferner eine Stellschraube aufweisen, über die das bewegliche Element bewegt werden kann. Auf diese Weise kann die Position des beweglichen Elements und damit auch der Werkzeugaufnahme manuell angepasst werden.

Das Basiselement kann zumindest ein zweites Führungselement aufweisen, das dazu ausgestaltet ist, eine Rotation einer an dem Basiselement befestigten Werkzeugaufnahme relativ zu dem Basiselement zu verhindern. Das zweite Führungselement kann beispielsweise ein oder mehrere Langlöcher aufweisen. Die Werkzeugaufnahme kann durch das erste und das zweite Führungselement an mehreren Positionen relativ zu dem Basiselement fixiert werden, so dass eine Drehung der Werkzeugaufnahme relativ zu dem Basiselement nicht mehr möglich ist.

Das Basiselement weist eine Grundaufnahme und einen Basiskörper auf, wobei der Höhenverstellmechanismus dazu ausgestaltet ist, eine Werkzeugaufnahme in verschiedenen Relativpositionen relativ zu dem Basiselement an diesem zu befestigen, ohne dabei die Position der Grundaufnahme relativ zu dem Basiskörper zu verändern. Der Höhenverstellmechanismus kann somit unabhängig von der Grundaufnahme sein.

Der Höhenverstellmechanismus kann derart ausgestaltet sein, dass bei einer Änderung der Relativposition der Werkzeugaufnahme zu dem Basiselement die Neigung der Werkzeugaufnahme unverändert bleibt. Damit bleibt auch die Neigung eines in der Werkzeugaufnahme befestigten Werkzeugs unverändert.

Der Lageeinstellmechanismus kann dazu ausgestaltet sein, eine an dem Basiselement befestigte Werkzeugaufnahme relativ zu dem Basiselement um einen Winkel α zu rotieren, wobei 0° ≤ |α| ≤ 10°. Vorzugsweise ist der Bereich, in dem der Betrag des Winkels α liegt, um den die an dem Basiselement befestigte Werkzeugaufnahme relativ zu diesem rotiert werden kann, gegeben durch 0° ≤ |α| ≤ 5°, besonders vorzugsweise durch 0° ≤ |α| ≤ 1°. Dementsprechend kann der Lageeinstellmechanismus insbesondere zur Vornahme von kleinen Winkelkorrekturen in der Ausrichtung der Werkzeugaufnahme relativ zu dem Basiselement geeignet sein. Der Lageeinstellmechanismus ist vorzugsweise nicht dazu geeignet, eine Rotation der Werkzeugaufnahme um mehr als 10° relativ zu dem Basiselement vorzunehmen, da andernfalls eine stabile Befestigung der Werkzeugaufnahme an dem Basiselement erschwert werden könnte.

Vorzugsweise sind das Basiselement und die Werkzeugaufnahme über Stifte und entsprechende Ausnehmungen miteinander verbunden. Eine solche Verbindung kann ein geringes Spiel aufweisen, das eine Rotation der Werkzeugaufnahme relativ zu dem Basiselement ermöglichen kann. Der Lageeinstellmechanismus kann dieses Spiel nutzen, um die Werkzeugaufnahme relativ zu dem Basiselement zu rotieren. Der Winkel, um den die Werkzeugaufnahme maximal relativ zu dem Basiselement gedreht werden kann, kann durch das Spiel in der Befestigung begrenzt sein. Dementsprechend kann der Winkel auf 1° begrenzt sein. In anderen Ausführungsformen kann der Winkel auf 5° oder auf 10° begrenzt sein.

Der Lageeinstellmechanismus kann ein drehbares Verbindungselement aufweisen, das mit der Werkzeugaufnahme verbindbar ist, wobei durch eine Drehung des Verbindungselements eine mit dem Verbindungselement verbundene Werkzeugaufnahme relativ zu dem Basiselement gedreht wird. Das drehbare Verbindungselement kann um einen Drehpunkt gedreht werden, der auf dem Basiskörper des Basiselements liegt. Beispielsweise kann der Drehpunkt durch die Drehachse einer Scheibe definiert sein, auf der das drehbare Verbindungselement versetzt zur Achse angeordnet ist. Auf diese Weise kann durch eine einfache Mechanik in dem Basiselement eine Änderung der Orientierung der Werkzeugaufnahme relativ zu dem Basiselement ermöglicht werden.

Der Lageeinstellmechanismus kann eine Stellschraube aufweisen, wobei das drehbare Verbindungselement auf einer Scheibe angeordnet sein kann, die dazu ausgestaltet ist, durch eine Verstellung der Stellschraube gedreht zu werden. Die Stellschraube kann beispielsweise auf einer Seitenfläche des Basiskörpers angeordnet sein. Dementsprechend kann die Stellschraube leicht zugänglich sein.

Insbesondere kann das Basiselement eine Führung aufweisen, die von der Stellschraube verschiebbar ist, wobei die Scheibe einen Vorsprung aufweist, der in die von der Stellschraube verschiebbare Führung eingreift. Die Führung kann in die zweite Raumrichtung verschoben werden, wobei eine Bewegung der Führung in die zweite Raumrichtung zu einer Drehung der Scheibe führt. Die zweite Raumrichtung ist dabei senkrecht zu der ersten Raumrichtung, in die die Werkzeugaufnahme durch den Höhenverstellmechanismus bewegt werden kann und senkrecht zu der dritten Raumrichtung, die parallel zur Grundaufnahme ist.

Ein weiterer Aspekt der vorliegenden Erfindung betrifft ein System, das ein Basiselement und eine Werkzeugaufnahme aufweist, die an dem Basiselement befestigbar ist. Bei dem Basiselement kann es sich insbesondere um das oben beschriebene Basiselement handeln. Dementsprechend kann jedes strukturelle und funktionelle Merkmal, das im Zusammenhang mit dem Basiselement offenbart ist, auch auf das System zutreffen. Bei der Werkzeugaufnahme kann es sich insbesondere um die oben beschriebene Werkzeugaufnahme handeln. Dementsprechend kann jedes strukturelle und funktionelle Merkmal, das im Zusammenhang mit der Werkzeugaufnahme offenbart ist, auch auf das System zutreffen.

Das Basiselement kann grundsätzlich mit jeder Art von Werkzeugaufnahme kombiniert werden, die lediglich dazu ausgestaltet sein sollte an dem Basiselement befestigt zu werden. Auf diese Weise können die Vorteile des Höhenverstellmechanismus sowie die Vorteile des Lageeinstellmechanismus für eine Vielzahl von Werkzeugaufnahmen genutzt werden. Die Werkzeugaufnahme ist an dem Basiselement befestigbar. Hierfür kann die Werkzeugaufnahme ein oder mehrere Befestigungselemente aufweisen. Das jeweilige Befestigungselement der Werkzeugaufnahme kann dabei in ein entsprechendes Führungselement des Basiselements aufgenommen werden und dort fixiert werden.

Ein weiterer Aspekt der vorliegenden Erfindung betrifft eine Anordnung, die das oben beschrieben System und ein Werkzeug aufweist. Dabei kann der Höhenverstellmechanismus des Basiselements derart ausgestaltet sein, dass die Relativposition der Werkzeugaufnahme zu dem Basiselement verändert werden kann, ohne die Relativposition des Werkzeugs zu der Werkzeugaufnahme zu verändern. Der Lageeinstellmechanismus des Basiselements kann derart ausgestaltet sein, dass bei einer Rotation einer an dem Basiselement befestigte Werkzeugaufnahme relativ zu dem Basiselement weder eine Position noch eine Orientierung eines an der Werkzeugaufnahme befestigten Werkzeugs relativ zu der Werkzeugaufnahme verändert wird.

Im Folgenden wird die Erfindung anhand der Figuren erläutert.
Figur 1 zeigt ein Basiselement 1 in einer perspektivischen Ansicht.
Figuren 2 und 3 zeigen eine Werkzeugaufnahme in perspektivischer Ansicht.
Figuren 4 und 5 zeigen schematisch einen Höhenverstellmechanismus.
Figur 6 zeigt eine Werkzeugaufnahme mit einem darin befestigten Werkzeug.
Figur 7 zeigt ein System aus einem Basiselement und einer Werkzeugaufnahme.
Figur 8 zeigt eine Anordnung, bestehend aus dem in Figur 7 gezeigten System und einem Werkzeug.
Figuren 9 bis 11 zeigen ein zweites Ausführungsbeispiel für eine Werkzeugaufnahme.
Figuren 12 bis 14 zeigen ein drittes Ausführungsbeispiel für eine Werkzeugaufnahme.
Figuren 15 bis 17 zeigen ein viertes Ausführungsbeispiel für eine Werkzeugaufnahme.Figuren 18 bis 20 zeigen ein fünftes Ausführungsbeispiel für eine Werkzeugaufnahme.
Figuren 21 bis 23 zeigen ein sechstes Ausführungsbeispiel für eine Werkzeugaufnahme.
Figuren 24 und 25 zeigen ein Basiselement gemäß einem alternativen Ausführungsbeispiel.

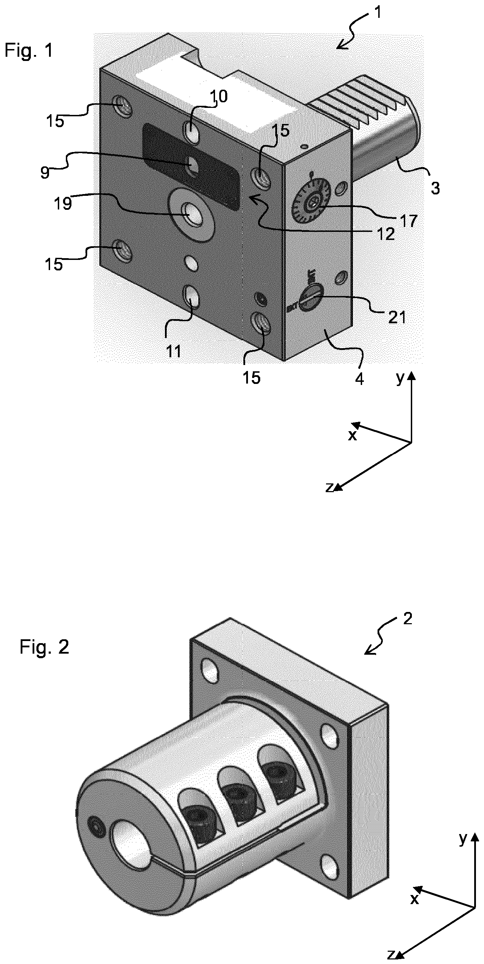

Figur 1 zeigt ein Basiselement 1, an dem eine Werkzeugaufnahme 2 befestigbar ist, in einer perspektivischen Ansicht. Das Basiselement 1 weist eine Grundaufnahme 3 und einen Basiskörper 4 auf. Bei der Grundaufnahme 3 handelt es sich um einen auf einer Rückseite des Basiskörpers 4 angebrachten Schaft. Die Grundaufnahme 3 ermöglicht es, das Basiselement 1 mit einer weiteren Maschine zu verbinden.

Der Basiskörper 4 weist ferner eine Vorderseite auf. Die Vorderseite des Basiskörpers 1 ist derart ausgestaltet, dass eine Werkzeugaufnahme 2 an der Vorderseite befestigt werden kann.

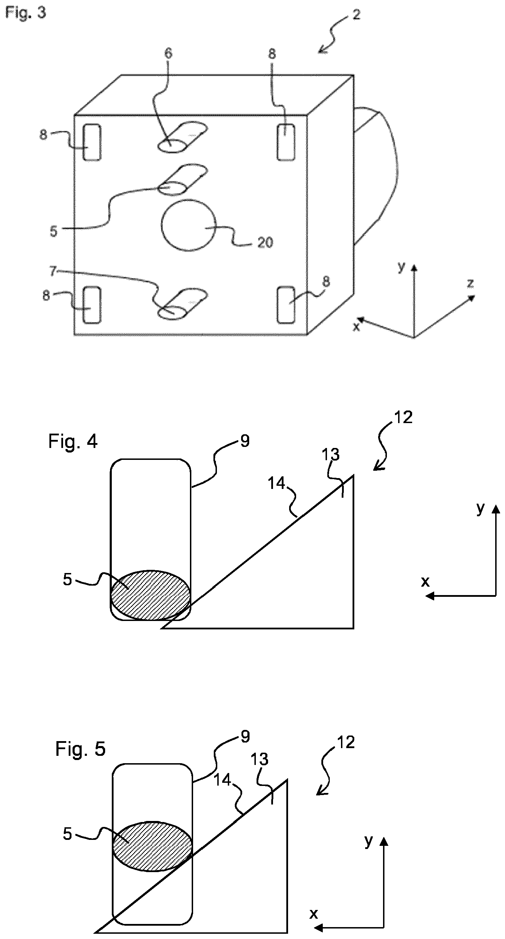

Figur 2 und Figur 3 zeigen perspektivische Ansichten einer Werkzeugaufnahme 2, die zu dem in Figur 1 gezeigten Basiselement 1 passt. Die Werkzeugaufnahme 2 weist ein erstes Befestigungselement 5, ein zweites Befestigungselement 6 und ein drittes Befestigungselement 7 auf. Bei den Befestigungselementen 5, 6, 7 handelt es sich jeweils um einen vorstehenden Stift.

Ferner weist die Werkzeugaufnahme 2 Öffnungen 8 auf. Bei den Öffnungen 8 handelt es sich um Langlöcher. Insbesondere weist die Werkzeugaufnahme 2 vier Langlöcher auf, die jeweils in einer Ecke der Werkzeugaufnahme 2 angeordnet

Im Folgenden wird die Befestigung der in den Figuren 2 und 3 gezeigten Werkzeugaufnahme 2 an dem Basiselement 1 beschrieben.
Dabei wird für die Bezeichnung dreier aufeinander senkrecht stehender Raumrichtungen stets das in den Figuren eingezeichnete Koordinatenkreuz verwendet. Eine erste Raumrichtung wird als y-Richtung bezeichnet. Eine zweite Raumrichtung wird als x-Richtung bezeichnet. Eine dritte Raumrichtung wird als z-Richtung bezeichnet.

Die dritte Raumrichtung, die im Folgenden als z-Richtung bezeichnet wird, ist parallel zu der Ausrichtung der Grundaufnahme 3 des Basiselements 1. Die erste und die zweite Raumrichtung, die im Folgenden als y- bzw. x-Richtung bezeichnet werden, sind senkrecht zur z-Richtung.

Das in Figur 1 gezeigte Basiselement 1 weist ein erstes Führungselement 9 auf. Das erste Führungselement 9 weist eine Öffnung auf. Bei der Öffnung handelt es sich um ein Langloch.

Die Öffnung weist in x-Richtung eine Ausdehnung auf, die der Ausdehnung des ersten Befestigungselements 5 der Werkzeugaufnahme 2 entspricht. In y-Richtung weist die Öffnung eine Ausdehnung auf, die größer ist als die Ausdehnung des ersten Befestigungselements 5 in y-Richtung.

Auf diese Weise kann es ermöglicht werden, die Werkzeugaufnahme 2 in y-Richtung relativ zu dem Basiselement 1 zu bewegen.

Ferner weist das Basiselement 1 ein zweites Führungselement 10 und ein drittes Führungselement 11 auf. Auch bei dem zweiten und bei dem dritten Führungselement 10, 11 handelt es sich jeweils um eine Öffnung, insbesondere um ein Langloch. Die Öffnungen des zweiten und des dritten Führungselements 10, 11 weisen jeweils in y-Richtung eine größere Ausdehnung auf als das entsprechende zweite beziehungsweise dritte Befestigungselement 6, 7 der Werkzeugaufnahme 2. In x-Richtung weisen die Öffnungen des zweiten und des dritten Führungselements 10, 11 jeweils eine Ausdehnung auf, die der Ausdehnung des zweiten beziehungsweise dritten Befestigungselements 6, 7 in x-Richtung entspricht.

Um nun die Werkzeugaufnahme 2 mit dem Basiselement 1 zu verbinden, wird das erste Befestigungselement 5 in das erste Führungselement 9 eingesteckt. Gleichzeitig werden das zweite Befestigungselement 6 und das dritte Befestigungselement 7 in das zweite und das dritte Führungselement 10, 11 eingesteckt. Auf diese Weise wird die Werkzeugaufnahme 2 relativ zu dem Basiselement 1 in x-Richtung fixiert.

In y-Richtung verbleibt zunächst ein Spiel, um das sich die Werkzeugaufnahme 2 relativ zu dem Basiselement 1 bewegen kann. Die Strecke, um die sich die Werkzeugaufnahme 2 relativ zu dem Basiselement 1 in y-Richtung bewegen kann, wird festgelegt durch die Differenz zwischen der größeren Ausdehnung des ersten Führungselementes 9 in y-Richtung und der kleineren Ausdehnung des ersten Befestigungselements 5 in y-Richtung.

Das Basiselement 1 weist ferner einen Höhenverstellmechanismus 12 auf, der es ermöglicht, die Werkzeugaufnahme 2 in der y-Richtung relativ zu dem Basiselement 1 in eine gewünschte Relativposition zu bewegen und an dieser Position zu befestigen. Insbesondere kann dabei die Werkzeugaufnahme 2 relativ zu dem Basiselement 1 in y-Richtung bewegt werden, ohne dabei die Relativpositionen der Werkzeugaufnahme 2 in x- oder z-Richtung in Bezug auf das Basiselement 1 zu verändern. Auch ein Verkippen oder Verdrehen der Werkzeugaufnahme 2 relativ zum Basiselement 1 wird verhindert.

Der Höhenverstellmechanismus 12 wird nachfolgend zunächst anhand der schematischen Figuren 4 und 5 erläutert. In den Figuren 4 und 5 sind jeweils das erste Führungselement 9, das erste Befestigungselement 5 der Werkzeugaufnahme 2 sowie ein bewegliches Element 13 des Höhenverstellmechanismus 12 gezeigt.

Das bewegliche Element 13 weist eine keilförmige Form auf. Das bewegliche Element 13 kann in x-Richtung relativ zu dem ersten Führungselement 9 bewegt werden. Insbesondere kann das beweglich Element 13 manuell relativ zu dem ersten Führungselement 9 in x-Richtung bewegt werden. Das bewegliche Element 13 ist im Innern des Basiselements 1 angeordnet und ist aus diesem Grund in der perspektivischen Darstellung in Figur 1 nicht zu erkennen.

Aufgrund der Schwerkraft wird die Werkzeugaufnahme 2 sich soweit in die negative y-Richtung relativ zu dem Basiselement 1 bewegen, bis das erste Befestigungselement 5 auf einen Anschlag trifft.

Figur 4 zeigt schematisch den Höhenverstellmechanismus 12 in einer Konfiguration, bei der die Werkzeugaufnahme 2 an der tiefstmöglichen Position angeordnet ist. Hier liegt das erste Befestigungselement 5 am unteren Ende der Öffnung des ersten Führungselements 9 an. Als "tiefstmögliche Position" bzw. "unteres Ende" wird hier die am weitesten in negative y-Richtung angeordnete Position bzw. das am weitesten in negative y-Richtung angeordnete Ende bezeichnet.

Figur 5 zeigt den Höhenverstellmechanismus 12 in einer weiteren Konfiguration, bei der das bewegliche Element 13 in x-Richtung bewegt wurde. Wird das bewegliche Element 13 in x-Richtung bewegt, so schiebt sich das bewegliche Element 13 unter das erste Befestigungselement 5 der Werkzeugaufnahme 2 und bewegt dadurch die Werkzeugaufnahme 2 in die positive y-Richtung. Durch eine schräge Fläche 14 des keilförmigen beweglichen Elementes 13 kann eine Bewegung des beweglichen Elementes 13 in x-Richtung umgewandelt werden in eine Bewegung der Werkzeugaufnahme 2 in y-Richtung. Gleichzeitig bewegen sich auch das zweite und das dritte Befestigungselement im zweiten und dritten Führungselement 10, 11 in y-Richtung.

Der Höhenverstellmechanismus 12 erlaubt es, die Werkzeugaufnahme 2 soweit in y-Richtung zu bewegen, bis das erste Befestigungselement 5 am oberen Ende der Öffnung des ersten Führungselements 11 anschlägt. Ist dieser Punkt erreicht, kann das bewegliche Element 13 nicht weiter in x-Richtung bewegt werden.

Auch eine Änderung der Relativposition der Werkzeugaufnahme 2 zu dem Basiselement 1 in negative y-Richtung ist möglich. Dazu wird das bewegliche Element 13 in die negative x-Richtung bewegt. Auf Grund der Schwerkraft gleitet das erste Befestigungselement 5 dabei im ersten Führungselement 9 stets soweit in die negative x-Richtung, dass es auf der schrägen Fläche 14 des beweglichen Elements 13 aufliegt.

Ferner weist das Basiselement 1 Gewindelöcher 15 auf. Diese entsprechen den in der Werkzeugaufnahme 2 angeordneten Öffnungen 8. Ist die Werkzeugaufnahme 2 nun auf die gewünschte y-Position eingestellt, so kann die Werkzeugaufnahme 2 mit dem Basiselement 1 verschraubt werden. Zu diesem Zweck werden Schrauben 16 in die Öffnungen 8 der Werkzeugaufnahme 2 gesteckt und mit den Gewindelöchern 15 des Basiselementes 1 verschraubt. Durch das Verschrauben wird die Werkzeugaufnahme 2 mit dem Basiselement 1 fixiert. Eine Relativbewegung der Werkzeugaufnahme 2 in x-, y- oder z-Richtung ist im verschraubten Zustand nicht möglich. Um die y-Ausrichtung nachzujustieren, kann die Verschraubung gelöst werden und die y-Position der Werkzeugaufnahme 2 relativ zum Basiselement 1 dadurch verändert werden, dass das bewegliche Element 13 in x-Richtung bewegt wird.

Ferner weist der Höhenverstellmechanismus 12 eine Stellschraube 17 auf. Die Stellschraube 17 ist an einer Außenfläche des Basiskörpers 4 angeordnet. Durch ein Drehen der Stellschraube 17 wird das bewegliche Element 13 in x-Richtung bewegt.

In einer alternativen Ausführungsform kann das bewegliche Element 13 eine Platte mit einem Langloch sein. Dabei kann das Langloch sich in einem schrägen Winkel zu der Öffnung des ersten Führungselements 9 erstrecken. Insbesondere können das Langloch des beweglichen Elements 13 und das Langloch des ersten Führungselements 9 derart ausgerichtet sein, dass sie einen Winkel zwischen 10° und 80° einschließen, alternativ einen Winkel zwischen 100° und 170°. Der schräge Winkel des Langlochs des beweglichen Elements 13 ermöglicht es, dass bei einer Bewegung des beweglichen Elements 13 in x-Richtung relativ zu dem ersten Führungselement 9 der Bereich, in dem sich das Langloch des beweglichen Elements 13 mit einer Öffnung des ersten Führungselement 9 überschneidet, in y-Richtung verschiebt.

Wird nunmehr das erste Befestigungselement 5 der Werkzeugaufnahme in das erste Führungselement 9 eingesteckt, so greift das erste Befestigungselement 5 auch in das Langloch des beweglichen Elements 13 ein. Wird dann das bewegliche Element 13 in x-Richtung verschoben, so wandert der Bereich, in dem sich das Langloch des beweglichen Elements 13 und das Langloch des ersten Führungselements 9 überschneiden, in y-Richtung. Dadurch wird das erste Befestigungselement 5 in y-Richtung verschoben. Dadurch wird die gesamte Werkzeugaufnahme 2 relativ zu dem Basiselement 1 in y-Richtung verschoben. Es handelt sich hierbei um eine gezwungene Führung.

Das hier gezeigte Basiselement 1 kann mit verschiedensten Werkzeugaufnahmen 2 zu einem System kombiniert werden. Dabei kann auf die oben beschriebene Weise stets eine Relativposition in y-Richtung der Werkzeugaufnahme 2 zu dem Basiselement 1 verändert werden.

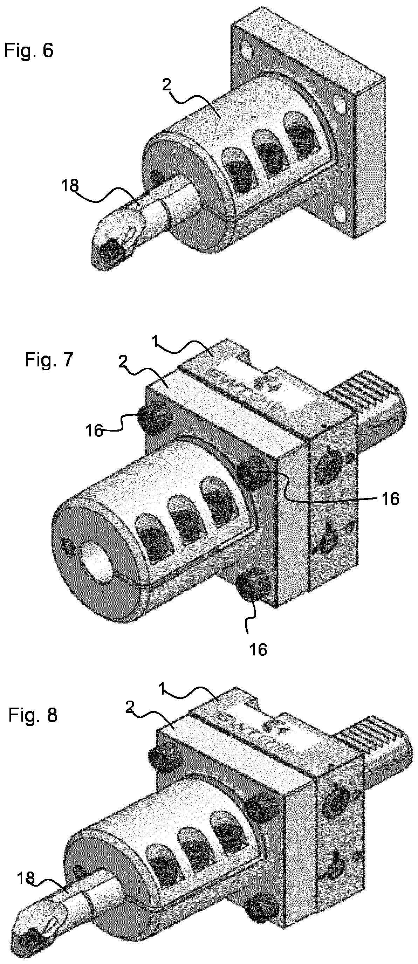

Bei der in Figur 2 gezeigten Werkzeugaufnahme 2 handelt es sich um einen Bohrstangenkopf für Scheibenrevolver. Figur 6 zeigt den Bohrstangenkopf mit einem in dem Bohrstangenkopf aufgenommenen Werkzeug 18. Das Werkzeug 18 ist eine Bohrstange. Der Bohrstangenkopf umschlingt dabei die Bohrstange voll. Es handelt sich bei der Bohrstange um eine schwingungsgedämpfte Bohrstange. Figur 7 zeigt ein an dem Basiselement 1 befestigte Werkzeugaufnahme 2. Figur 8 zeigt ferner, dass in dieser Werkzeugaufnahme 2 nunmehr ein Bohrstangenkopf aufgenommen ist.

Die schwingungsgedämpfte Bohrstange weist eine hohe Auskragung auf. Diese Auskragung ist bei der Ausrichtung der Bohrstange zu berücksichtigen. Der an dem Basiselement 2 vorgesehene Höhenverstellmechanismus 12 ermöglicht es, die absolute Position des Werkzeugs zu korrigieren, indem die Relativposition der Werkzeugaufnahme 2 zu dem Basiselement 1 verändert wird. Auf diese Weise kann auch ein Werkzeug 18 mit einer hohen Auskragung optimal positioniert werden.

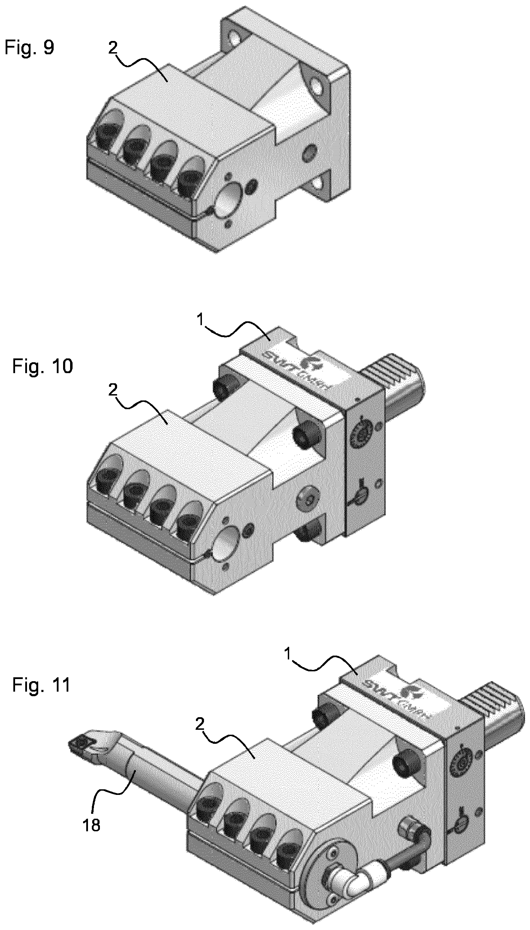

Figur 9 zeigt ein weiteres Beispiel für eine Werkzeugaufnahme 2, die mit dem Basiselement 1 kombinierbar ist, d.h. die an dem Basiselement 1 befestigbar ist, wobei eine Veränderung der y-Ausrichtung der Werkzeugaufnahme 2 an dem Basiselement 1 vorgenommen werden kann. Es handelt sich bei der Werkzeugaufnahme 2 um einen Bohrstangenhalter für Sternrevolver. Figur 10 zeigt diese Werkzeugaufnahme befestigt an dem Basiselement 1. Figur 11 zeigt ferner eine in der Werkzeugaufnahme aufgenommene Bohrstange.

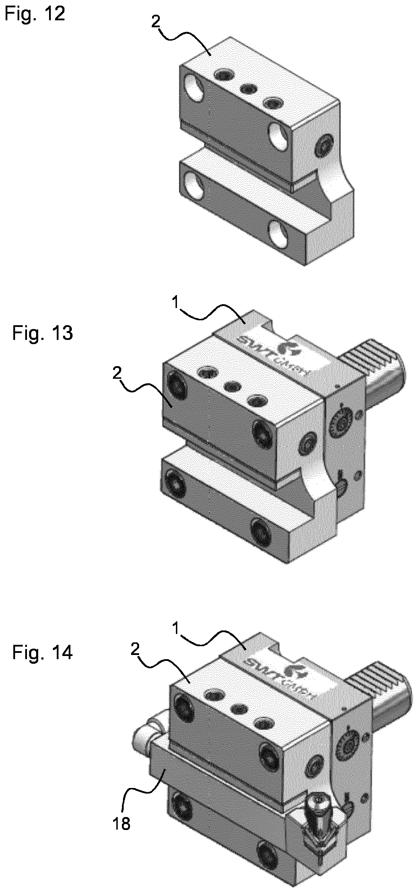

Figur 12 zeigt ein weiteres Beispiel für eine an dem Basiselement 1 befestigbare Werkzeugaufnahme. Es handelt sich hierbei um einen Maulhalter für Scheibenrevolver. Figur 13 zeigt einen an dem Basiselement 1 befestigten Maulhalter und Figur 14 zeigt ferner ein in dem Maulhalter befestigtes Werkzeug. Bei dem Werkzeug 18 handelt es sich um einen Seitendrehmeisel mit Wendeschneidplatte.

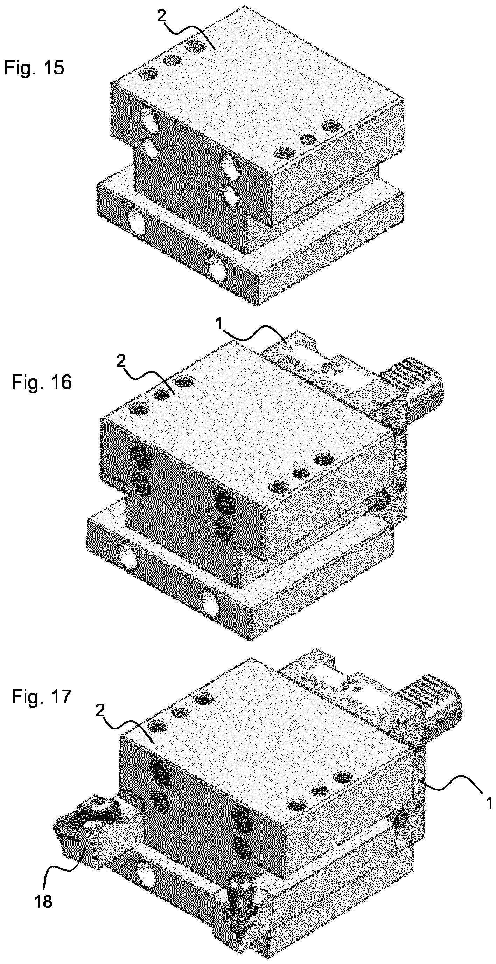

Die Figuren 15 bis 17 zeigen eine Werkzeugaufnahme 2, bei der es sich um einen Maulhalter für Sternrevolver handelt, die ebenfalls mit dem Basiselement 1 kombinierbar ist.

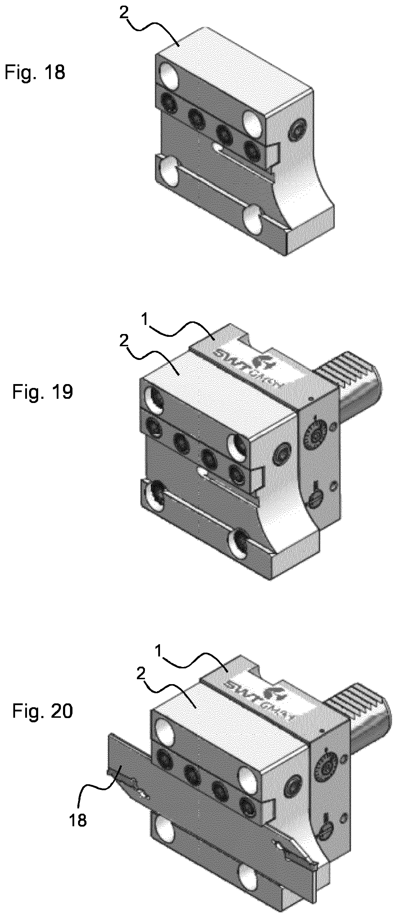

Die Figuren 18 bis 20 zeigen eine Werkzeugaufnahme 2, bei der es sich um einen Stechschwerthalter für Scheibenrevolver handelt, die ebenfalls mit dem Basiselement 1 kombinierbar ist.

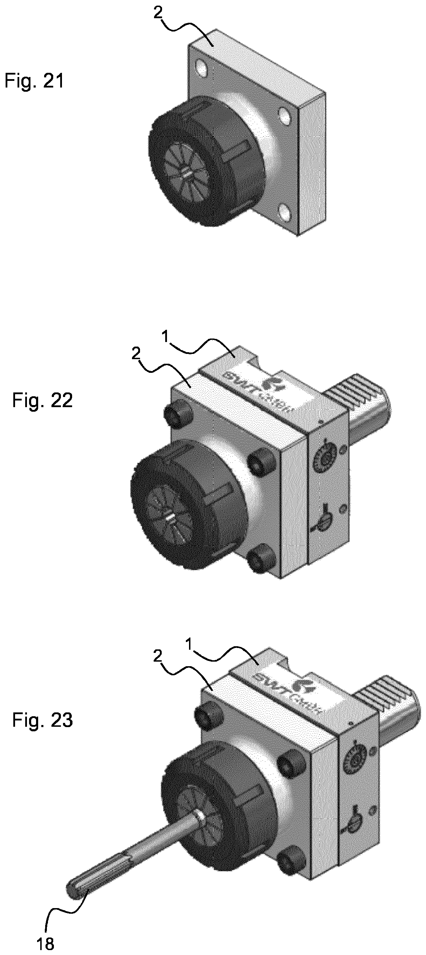

Die Figuren 21 bis 23 zeigen ein weiteres Beispiel für eine Werkzeugaufnahme 2, die an dem Basiselement 1 befestigbar ist. Bei der Werkzeugaufnahme 2 handelt es sich um einen Spannzangenhalter für Scheibenrevolver.

Der entscheidende Punkt ist bei den in den Figuren gezeigten Systemen, die jeweils aus dem Basiselement 1 und einer Werkzeugaufnahme 2 bestehen, dass der Höhenverstellmechanismus 12 des Basiselements 1 es ermöglicht, die Werkzeugaufnahme 2 in verschiedenen Positionen relativ zu dem Basiselement 1 an diesem zu befestigen, wobei die verschiedenen Relativpositionen sich in der y-Position voneinander unterscheiden.

Der Höhenverstellmechanismus 12 kann durch das oben beschriebene erste Ausführungsbeispiel gebildet werden. Ferner sind darüber hinaus auch andere Ausführungsbeispiele des Höhenverstellmechanismus 12 möglich. Der Höhenverstellmechanismus 12 kann beispielsweise eine Schiene aufweisen, entlang der die Werkzeugaufnahme 2 relativ zu dem Basiselement 1 in y-Richtung gefahren werden kann.

Der Höhenverstellmechanismus 12 ermöglicht es, die absolute Position eines in der Werkzeugaufnahme 2 aufgenommenen Werkzeuges 18 in y-Richtung zu korrigieren, ohne dabei das Werkzeug 18 relativ zu der Werkzeugaufnahme 2 bewegen zu müssen. Das Werkzeug 18 kann somit fest in der Werkzeugaufnahme 2 verspannt bleiben, und eine Korrektur der y-Position des Werkzeuges 18 kann dadurch vorgenommen werden, dass der Höhenverstellmechanismus 12 die relative y-Position der Werkzeugaufnahme 2 zu dem Basiselement 1 verändert. Dabei wird die x- und die y-Relativposition von Werkzeugaufnahme 2 zu Basiselement 1 nicht verändert.

Ferner weist das Basiselement 1 eine interne Kühlmittelzufuhr auf. Das Basiselement 1 weist eine in Figur 1 gezeigte Kühlmittelübergabe 19 auf. Dabei handelt es sich um eine Öffnung, aus dem ein in dem Basiselement 1 geführtes Kühlmittel heraustreten kann.

Die Werkzeugaufnahme 2 weist ferner eine entsprechende Kühlmittelaufnahme 20 auf, die beispielsweise in Figur 3 gezeigt ist. Bei der Kühlmittelaufnahme 20 handelt es sich um eine Öffnung in der Werkzeugaufnahme 2, durch die ein Kühlmittel in die Werkzeugaufnahme 2 eingeleitet werden kann. In der Werkzeugaufnahme 2 wird das Kühlmittel dann dem Werkzeug 18 zugeführt.

Die Öffnung der Kühlmittelübergabe 19 des Basiselements 1 und die Öffnung der Kühlmittelaufnahme 20 der Werkzeugaufnahme 2 sind jeweils derart dimensioniert, dass eine Kühlmittelüberleitung vom Basiselement 1 zur Werkzeugaufnahme 2 in jeder Position möglich ist, in der die Werkzeugaufnahme 2 an dem Basiselement 1 befestigt werden kann. Dazu weisen die Öffnungen einen Durchmesser auf, der größer ist als die Länge der Strecke, um die die Werkzeugaufnahme 2 relativ zu dem Basiselement 1 bewegt werden kann.

Das Basiselement 1 weist ferner eine Umschaltung 21 des Kühlmittels von interner Kühlmittelzuführung auf externe Kühlmittelzuführung auf. Mit einem Schlitzschraubendreher kann eine Wählscheibe der Umschaltung 21 in die entsprechende Position gedreht werden, sodass das Kühlmittel entsprechend umgeleitet wird.

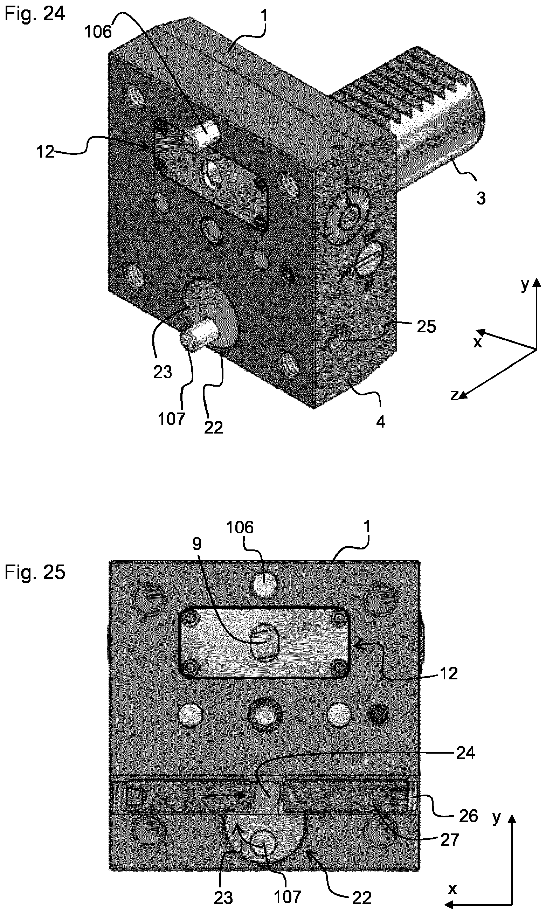

Figur 24 zeigt ein Basiselement 1, das zusätzlich zu dem Höhenverstellmechanismus 12 einen Lageeinstellmechanismus 22 aufweist. In einem weiteren Beispiel weist das Basiselement 1 keinen Höhenverstellmechanismus 12, sondern nur den Lageeinstellmechanismus 22 auf.

Figur 24 zeigt das Basiselement 1 in einer perspektivischen Ansicht. Figur 25 zeigt einen Querschnitt durch das in Figur 24 gezeigte Basiselement 1. Der Lageeinstellmechanismus 22 ist dazu ausgestaltet, eine Werkzeugaufnahme 2 relativ zu dem Basiselement 1 zu drehen und dadurch eine Winkelkorrektur in der Orientierung der Werkzeugaufnahme 2 und gegebenenfalls in der Orientierung eines in der Werkzeugaufnahme 2 befestigten Werkzeugs 18 relativ zu dem Basiselement 1 vorzunehmen.

Das Basiselement 1 weist gemäß dem in den Figuren 24 und 25 gezeigten Ausführungsbeispiel das erste Befestigungselement 106 und das zweite Befestigungselement 107 auf, wobei es sich bei dem ersten und dem zweiten Befestigungselement 106, 107 jeweils um einen Stift handelt. Das erste Befestigungselement 106 ist starr mit dem Basiskörper 4 des Basiselements 1 verbunden. Das zweite Befestigungselement 107 ist auf einer drehbaren Scheibe 23 angeordnet. Die Scheibe 23 ist in dem Basiskörpers 4 des Basiselements 1 angeordnet.

Die drehbare Scheibe 23 weist einen Vorsprung 24 auf, über den die Scheiben 23 gedreht werden kann. Ferner weist das Basiselement 1 eine Öffnung 25 für eine Stellschraube 26 auf. Die Öffnung 25 weist ein Gewinde auf, in das die Stellschraube 26 eingreift. In dem in Figur 25 gezeigten Querschnitt ist gezeigt, dass die Stellschraube 26 eine Führung 27 betätigt. Bei der Führung 27 handelt es sich um einen mit der Stellschraube 26 verbundenen Balken. Durch eine Verstellung der Stellschraube 26 kann die Führung 27 in die zweite Raumrichtung bewegt werden. Der Vorsprung 24 ist in einer Öffnung der Führung 27 aufgenommen.

Wie in Figur 25 durch die Pfeile angedeutet, kann beispielsweise durch eine Bewegung der Führung 27 nach rechts, d.h. in die negative zweite Raumrichtung x, die Scheibe 23 im Uhrzeigersinn rotiert werden. Konstruktionsbedingt kann die Scheibe 23 nicht um beliebig große Winkel gedreht werden.

Das Basiselement 1 weist ferner ein Führungselement 9 auf, das bereits im Zusammenhang mit dem Höhenverstellmechanismus erläutert wurde.

Die Werkzeugaufnahme 2, die dazu vorgesehen ist, an dem in Basiselement 1 befestigt zu werden, weist ein erstes Führungselement und ein zweites Führungselement auf, wobei das erste Führungselement und das zweite Führungselement jeweils eine Öffnung aufweisen, die dazu ausgebildet ist, das erste Befestigungselement 106 beziehungsweise das zweite Befestigungselement 107 aufzunehmen. Ferner weist die Werkzeugaufnahme eine Befestigungselement, vorzugsweise einen Stift, auf, der von dem Führungselement 9 aufgenommen werden kann.

Bei der Befestigung der Werkzeugaufnahme 2 an dem Basiselement 1 durch die oben beschriebenen Befestigungselemente, die in entsprechenden Führungselementen aufgenommen werden können, verbleibt ein kleines Spiel, das von dem Lageeinstellmechanismus 22 zur Veränderung der Rotationslage der Werkzeugaufnahme 2 relativ zum Basiselement 1 genutzt wird.
In weiteren alternative Ausführungsbeispielen kann das Basiselement 1 keine oder einige oder sämtliche der Befestigungselemente aufweisen, wobei an der Werkzeugaufnahme 2 entsprechende Führungselemente zur Aufnahme der Befestigungselemente vorgesehen sind. Ferner kann das Basiselement 1 keine oder einige oder sämtliche der Führungselemente aufweisen, wobei an der Werkzeugaufnahme 2 entsprechende Befestigungselemente vorgesehen sind, die in den jeweiligen Führungselementen aufgenommen werden können.

### Bezugszeichenliste

- 1: Basiselement
- 2: Werkzeugaufnahme
- 3: Grundaufnahme
- 4: Basiskörper
- 5: erstes Befestigungselement
- 6: zweites Befestigungselement
- 7: drittes Befestigungselement
- 8: Öffnung
- 9: erstes Führungselement
- 10: zweites Führungselement
- 11: drittes Führungselement
- 12: Höhenverstellmechanismus
- 13: bewegliches Element
- 14: schräge Fläche
- 15: Gewindelöcher
- 16: Schraube
- 17: Stellschraube
- 18: Werkzeug
- 19: Kühlmittelübergabe
- 20: Kühlmittelaufnahme
- 21: Umschaltung
- 22: Lageeinstellmechanismus
- 23: Scheibe
- 24: Vorsprung
- 25: Öffnung
- 26: Stellschraube
- 27: Führung
- 106: erste Befestigungselement
- 107: zweite Befestigungselement

## Patentansprüche

1. Basiselement (1), an dem eine Werkzeugaufnahme (2) befestigbar ist,
wobei das Basiselement (1) eine Grundaufnahme (3) aufweist, die es ermöglicht, das Basiselement (1) mit einer Maschine zu verbinden,
wobei das Basiselement (1) einen
Höhenverstellmechanismus (12) aufweist,
wobei der Höhenverstellmechanismus (12) dazu ausgestaltet ist, eine Werkzeugaufnahme (2) in verschiedenen Relativpositionen relativ zu dem Basiselement (1) an diesem zu befestigen,
so dass die Relativposition der Werkzeugaufnahme (2) zu dem Basiselement (1) in einer ersten Raumrichtung (y) veränderbar ist, wobei die Werkzeugaufnahme (2) als Ganzes relativ zu dem Basiselement (1) in der ersten Raumrichtung (y) bewegbar ist,
**dadurch gekennzeichnet, dass** das Basiselement (1) einen Lageeinstellmechanismus (22) aufweist, der dazu ausgestaltet ist, die Orientierung einer an dem Basiselement (1) befestigte Werkzeugaufnahme (2) relativ zu dem Basiselement (1)dadurch zu ändern, dass die Werkzeugaufnahme (2) relativ zu dem Basiselement (1) gedreht wird.

2. Basiselement (1) gemäß Anspruch 1,
wobei der Höhenverstellmechanismus (12) derart ausgestaltet ist, dass bei einer Änderung der Relativposition der Werkzeugaufnahme (2) zu dem Basiselement (1) die Relativposition der Werkzeugaufnahme (2) in zwei zu der ersten Raumrichtung (y) senkrechten Raumrichtungen (x, z) unverändert bleibt.

3. Basiselement (1) gemäß einem der vorherigen Ansprüche, aufweisend zumindest ein erstes Führungselement (9), das dazu ausgestaltet ist, eine Bewegung einer an dem Basiselement (1) zu befestigenden Werkzeugaufnahme (2) in die erste Raumrichtung (y) relativ zu dem Basiselement (1) zu ermöglichen und eine Bewegung der Werkzeugaufnahme (2) in zu der ersten Raumrichtung (y) senkrechten Raumrichtungen (x, z) zu verhindern.

4. Basiselement (1) gemäß einem der vorherigen Ansprüche,
wobei der Höhenverstellmechanismus (12) zumindest ein erstes Führungselement (9) mit einer Öffnung, die dazu ausgestaltet ist, ein Element (5) einer an dem Basiselement (1) befestigten Werkzeugaufnahme (2) aufzunehmen, und ein bewegliches Element (13), das relativ zu dem ersten Führungselement (9) bewegt werden kann und das einen Teil der Öffnung verdeckt, aufweist.

5. Basiselement (1) gemäß Anspruch 4,
wobei der Höhenverstellmechanismus (12) derart ausgestaltet ist, dass eine an dem Basiselement (1) zu befestigende Werkzeugaufnahme (2) relativ zu dem Basiselement (1) in die erste Raumrichtung bewegt wird, wenn das bewegliche Element (13) relativ zu dem ersten Führungselement (9) bewegt wird.

6. Basiselement (1) gemäß einem der Ansprüche 4 oder 5, ferner aufweisend eine Stellschraube (17), über die das bewegliche Element (13) bewegt werden kann.

7. Basiselement (1) gemäß einem der vorherigen Ansprüche, aufweisend zumindest ein zweites Führungselement (10), das dazu ausgestaltet ist, eine Rotation einer an dem Basiselement (1) befestigten Werkzeugaufnahme (2) relativ zu dem Basiselement (1) zu verhindern.

8. Basiselement (1) gemäß einem der vorherigen Ansprüche, das ferner eine Grundaufnahme (3) und einen Basiskörper (4) aufweist, wobei der Höhenverstellmechanismus (12) dazu ausgestaltet ist, eine Werkzeugaufnahme (2) in verschiedenen Relativpositionen relativ zu dem Basiselement (1) an diesem zu befestigen, ohne dabei die Position der Grundaufnahme (3) relativ zu dem Basiskörper (4) zu verändern
und/oder
wobei der Höhenverstellmechanismus (12) derart ausgestaltet ist, dass bei einer Änderung der Relativposition der Werkzeugaufnahme (2) zu dem Basiselement (1) die Neigung der Werkzeugaufnahme (2) unverändert bleibt.

9. Basiselement (1) gemäß einem der vorherigen Ansprüche, aufweisend den Lageeinstellmechanismus (22), wobei der Lageeinstellmechanismus (22) dazu ausgestaltet ist, eine an dem Basiselement (1) befestigte Werkzeugaufnahme (2) relativ zu dem Basiselement (1) um einen Winkel α zu drehen, wobei 0° ≤ |α| ≤ 10°.

10. Basiselement (1) gemäß einem der vorherigen Ansprüche, aufweisend den Lageeinstellmechanismus (22), wobei der Lageeinstellmechanismus (22) ein drehbares Befestigungselement (107) aufweist, das mit der Werkzeugaufnahme (2) verbindbar ist, wobei durch eine Drehung des Befestigungselements (107) eine mit dem Befestigungselement (107) verbundene Werkzeugaufnahme (2) relativ zu dem Basiselement (1) gedreht wird.

11. Basiselement (1) gemäß dem vorherigen Anspruch,
wobei der Lageeinstellmechanismus (22) eine Stellschraube (26) aufweist, und
wobei das drehbare Befestigungselement (107) auf einer Scheibe (23) angeordnet ist, die dazu ausgestaltet ist, durch eine Verstellung der Stellschraube (26) gedreht zu werden.

12. Basiselement (1) gemäß dem vorherigen Anspruch,
wobei das Basiselement (1) eine Führung (27) aufweist, die dazu ausgestaltet ist, durch eine Betätigung der Stellschraube (26) verschoben zu werden,
wobei die Scheibe (23) einen Vorsprung (24) aufweist, der in die von der Stellschraube (26) verschiebbare Führung (27) eingreift.

13. System aufweisend ein Basiselement (1) gemäß einem der vorherigen Ansprüche und eine Werkzeugaufnahme (2), die an dem Basiselement (1) befestigbar ist.

14. Anordnung aufweisend ein System gemäß Anspruch 13 und ein Werkzeug (18), wobei der Höhenverstellmechanismus (12) des Basiselements (1) derart ausgestaltet ist, dass die Relativposition der Werkzeugaufnahme (2) zu dem Basiselement (1) verändert werden kann, ohne die Relativposition des Werkzeugs (18) zu der Werkzeugaufnahme (2) zu verändern und/oder wobei der Lageeinstellmechanismus (22) des Basiselements (1) derart ausgestaltet ist, dass bei einer Drehung einer an dem Basiselement (1) befestigte Werkzeugaufnahme (2) relativ zu dem Basiselement (1) weder eine Position noch eine Orientierung eines an der Werkzeugaufnahme (2) befestigten Werkzeugs (18) relativ zu der Werkzeugaufnahme (2) verändert wird.

## Claims

1. Base element (1) to which a tool holder (2) can be attached,
wherein the base element (1) has a base adapter (3) which makes it possible to connect the base element (1) to a machine,
wherein the base element (1) has a height adjustment mechanism (12),
wherein the height adjustment mechanism (12) is adapted to attach a tool holder (2) to the base element (1) at various relative positions relative to the base element (1),
so that the relative position of the tool holder (2) to the base element (1) is changeable in a first spatial direction (y), wherein the tool holder (2) as a whole is movable relative to the base element (1) in the first spatial direction (y),
**characterized in that**, the base element (1) comprises a position adjusting mechanism (22), which is adapted to change the orientation of a tool holder (2) attached to the base element (1) relative to the base element (1) by rotating the tool holder (2) relative to the base element (1).

2. Base element (1) according to claim 1,
wherein the height adjustment mechanism (12) is designed in such a way that when the relative position of the tool holder (2) to the base element (1) changes, the relative position of the tool holder (2) remains unchanged in two spatial directions (x, z) perpendicular to the first spatial direction (y).

3. Base element (1) according to one of the previous claims, comprising at least one first guide element (9) which is designed to enable a tool holder (2) to be attached to the base element (1) to move in the first spatial direction (y) relative to the base element (1) and to prevent the tool holder (2) from moving in spatial directions (x, z) perpendicular to the first spatial direction (y).

4. Base element (1) according to one of the previous claims, wherein the height adjustment mechanism (12) comprises at least a first guide member (9) having an opening adapted to receive a member (5) of a tool holder (2) attached to the base element (1), and a movable member (13) movable relative to the first guide member (9) and covering part of the opening.

5. Base element (1) according to claim 4,
wherein the height adjustment mechanism (12) is configured such that a tool holder (2) to be attached to the base element (1) is moved relative to the base element (1) in the first spatial direction when the movable member (13) is moved relative to the first guide member (9).

6. Base element (1) according to one of claims 4 or 5, further comprising an adjusting screw (17) by which the movable member (13) can be moved.

7. Base element (1) according to one of the previous claims, comprising at least one second guide element (10) adapted to prevent rotation of a tool holder (2) attached to the base element (1) relative to the base element (1).

8. Base element (1) according to one of the previous claims, further comprising a base adapter (3) and a base body (4), wherein the height adjustment mechanism (12) is adapted to fix a tool holder (2) to the base element (1) at various relative positions relative to the base element (1) without changing the position of the base adapter (3) relative to the base body (4)
and/or
wherein the height adjustment mechanism (12) is designed in such a way that the inclination of the tool holder (2) remains unchanged when the relative position of the tool holder (2) to the base element (1) changes.

9. Base element (1) according to one of the previous claims, comprising the position adjusting mechanism (22), wherein the position adjusting mechanism (22) is adapted to rotate a tool holder (2) attached to the base element (1) relative to the base element (1) through an angle α, where 0° ≤ lαl ≤ 10°.

10. Base element (1) according to one of the previous claims, comprising the position adjusting mechanism (22), the position adjusting mechanism (22) comprising a rotatable mounting member (107) connectable to the tool holder (2), wherein rotation of the mounting member (107) rotates a tool holder (2) connected to the mounting member (107) relative to the base element (1).

11. Base element (1) according to the previous claim,
wherein the position adjusting mechanism (22) includes a set screw (26), and
wherein the rotatable mounting member (107) is arranged on a disc (23) adapted to be rotated by an adjustment of the set screw (26).

12. Base element (1) according to the previous claim,
wherein the base element (1) has a guide (27) adapted to be displaced by operation of the set screw (26),
wherein the disc (23) has a projection (24) which engages in the guide (27) displaceable by the set screw (26).

13. System comprising a base element (1) according to one of the previous claims and a tool holder (2) which is attachable to the base element (1).

14. Arrangement comprising a system according to claim 13 and a tool (18), wherein the height adjustment mechanism (12) of the base element (1) is designed in such a way that the relative position of the tool holder (2) to the base element (1) can be changed without changing the relative position of the tool (18) to the tool holder (2) and/or wherein the position adjusting mechanism (22) of the base element (1) is designed in such a way, in that neither a position nor an orientation of a tool (18) attached to the tool holder (2) relative to the base element (1) is changed during a rotation of a tool holder (2) attached to the base element (1) relative to the tool holder (2).

## Revendications

1. Élément de base (1) auquel un porte-outil (2) peut être fixé,
dans lequel l'élément de base (1) comporte un réceptacle de base (3) qui permet de connecter l'élément de base (1) à une machine,
dans laquelle l'élément de base (1) comporte un mécanisme de réglage de la hauteur (12),
dans lequel le mécanisme de réglage de la hauteur (12) est adapté pour fixer un porte-outil (2) à l'élément de base (1) à diverses positions relatives par rapport à l'élément de base (1),
de sorte que la position relative du porte-outil (2) par rapport à l'élément de base (1) est modifiable dans une première direction spatiale (y), dans laquelle le porte-outil (2) dans son ensemble est mobile par rapport à l'élément de base (1) dans la première direction spatiale (y),
**caractérise par le fait que** l'élément de base (1) comporte un mécanisme de réglage de la position (22) qui est adapté pour modifier l'orientation d'un porte-outil (2) fixé à l'élément de base (1) par rapport à l'élément de base (1) en faisant tourner le porte-outil (2) par rapport à l'élément de base (1).

2. Élément de base (1) selon la revendication 1,
dans lequel le mécanisme de réglage de la hauteur (12) est conçu de telle sorte que, lorsque la position relative du porte-outil (2) par rapport à l'élément de base (1) change, la position relative du porte-outil (2) reste inchangée dans deux directions spatiales (x, z) perpendiculaires à la première direction spatiale (y).

3. Élément de base (1) selon l'une des revendications précédentes,
comprenant au moins un premier élément de guidage (9) qui est conçu pour permettre un porte-outil (2) où le guidage (9) doit être fixé sur l'élément de base (1) déplacer dans la première direction spatiale (y) par rapport à l'élément de base (1) et pour empêcher le porte-outil (2) de se déplacer dans des directions spatiales (x, z) perpendiculaires à la première direction spatiale (y).

4. Élément de base (1) selon l'une des revendications précédentes,
dans lequel le mécanisme de réglage en hauteur (12) comprend au moins un premier élément de guidage (9) ayant une ouverture adaptée pour recevoir un élément (5) d'un porte-outil (2) fixé à l'élément de base (1), et un élément mobile (13) qui peut être déplacé par rapport au premier guidage (9) et qui couvre une partie de l'ouverture.

5. Élément de base (1) selon la revendication 4,
dans lequel le mécanisme de réglage de la hauteur (12) est configuré de telle sorte qu'un porte-outil (2) devant être fixé à l'élément de base (1) est déplacé par rapport à l'élément de base (1) dans la première direction spatiale lorsque l'élément mobile (13) est déplacé par rapport au premier élément de guidage (9).

6. Élément de base (1) selon l'une des revendications 4 ou 5,
comprenant en outre une vis de réglage (17) par laquelle l'élément mobile (13) peut être déplacé.

7. Élément de base (1) selon l'une des revendications précédentes,
comprenant au moins un deuxième élément de guidage (10) adapté pour empêcher la rotation d'un porte-outil (2) fixé à l'élément de base (1) par rapport à l'élément debase (1).

8. Élément de base (1) selon l'une des revendications précédentes,
comprenant en outre un réceptacle de base (3) et un corps de base (4), dans lequel le mécanisme de réglage en hauteur (12) est adapté pour fixer un porte-outil (2) sur l'élément de base (1) à différentes positions relatives par rapport à l'élément de base (1) sans modifier la position de l'élément de base (3) par rapport au corps de base (4)
et/ou
dans lequel le mécanisme de réglage de la hauteur (12) est conçu de telle manière que lorsque la position relative du porte-outil (2) par rapport à l'élément de base (1) change, l'inclinaison du porte-outil (2) reste inchangée.

9. Élément de base (1) selon l'une des revendications précédentes,
comprenant le mécanisme de réglage de position (22), dans lequel le mécanisme de réglage de position (22) est adapté pour faire tourner un porte-outil (2) fixé à l'élément de base (1) par rapport à l'élément de base (1) d' un angle α où 0° ≤ |α| ≤ 10°.

10. Élément de base (1) selon l'une des revendications précédentes,
comprenant le mécanisme de réglage de position (22), dans lequel le mécanisme de réglage de position(22) comprend un élément de montage rotatif (107) pouvant être connecté au porte-outil (2), dans lequel la rotation de l'élément de montage(107) fait tourner un porte-outil (2) connectéà l'élément de montage (107) par rapport à l'élément de base (1).

11. Élément de base (1) selon la demande précédente,
dans lequel le mécanisme de réglage de la position (22) comprend une vis de réglage (26), et
dans lequel l'élément de fixation rotatif (107) est disposé sur une rondelle (23) adaptée pour être tournée par un ajustement de la vis de réglage (26).

12. Élément de base (1) selon la demande précédente,
dans lequel l'élément de base (1) comporte un guide (27) adapté pour être déplacé par l'action de la vis de réglage (26),
dans laquelle la rondelle (23) présente une saillie (24) qui s'engage dans le guide (27) déplaçable par la vis de réglage (26).

13. Système comprenant un élément de base (1) selon l'une des revendications précédentes et un porte-outil (2) qui peut être fixé à l'élément de base (1).

14. Arrangement comprenant un système selon la revendication 13 et un outil (18), dans lequel le mécanisme de réglage en hauteur (12) de l' élément debase (1) est conçu de telle manière que la position relative du porte-outil (2) par rapport à l'élément de base (1) peut être modifiée sans changer la position relative de l'outil (18) par rapport au porte-outil (2) et/ou dans lequel le mécanisme de réglage de position (22) de l'élément de base (1) est conçu de telle manière, en ce que ni une position ni une orientation d'un outil (18) fixé au porte-outil (2) par rapport à 1 'élément de base (1) n'est modifiée lors d'une rotation d' un porte-outil (2) fixé à l'élément de base (1) par rapport au porte-outil (2).
